# EUROPEAN PATENT APPLICATION

(11) **EP 1 696 155 A2**
(43) Date of publication of application: **30.08.2006**
(21) Application number: 06110093.9
(22) Date of filing: 17.02.2006
(51) Int. Cl.: F16J 15/32

(54) **Brush seal assembly**

(30) Priority: 25.02.2005 JP 2005051432
(71) Applicant: KABUSHIKI KAISHA TOSHIBA, Tokyo (JP)
(72) Inventor: Yutaka, Hashiba, Tokyo 105-8001 (JP); Masayuki, Ichimonji, Tokyo 105-8001 (JP); Hitoshi, Katayama, Tokyo 105-8001 (JP); Hidekazu, Shiomi, Tokyo 105-8001 (JP); Yasuo, Kabata, Tokyo 105-8001 (JP)
(74) Representative: Henkel, Feiler & Hänzel

(57) **Abstract**

A liquid-sealing shaft seal apparatus includes a rotation shaft (1), brush seals (4a, 4b) arranged in such a manner as to contact and surround the rotation shaft (1), and a brush holder (3) which holds the brush seals (4a, 4b), wherein more than one line of the brush seals are arranged in the axial direction of the rotation shaft through a cavity (10), and the brush holder (3) is provided with a liquid returning pass (12) to return a liquid having leaked through the brush seals (4a, 4b) into the cavity (10) to the side of an atmosphere (S1) in which a liquid is present as a sealing target.

## Description

The invention relates to a liquid-sealing shaft seal apparatus for a rotary electrical machine using liquid, such as lubrication oil or seal oil, and to a rotary electrical machine using the shaft seal apparatus.

In general, large rotary electrical machines employ slider bearings using oil as a lubricant. In order to achieve the high efficiency, hydrogen-cooled rotary electrical machines employ oil seals using sealing oil to seal hydrogen gas for cooling the interior of the machine inside of the rotary electrical machine. Generally, labyrinth seals are used to prevent lubrication oil, seal oil, or the like from leaking to the interior or exterior of a rotary electrical machine. In this case, it is generally known that, as an inherent structural nature of the labyrinth seal, a relatively large gap exists between the seal and a rotation shaft of the rotary electrical machine, the fluid may leak responsively following, for example, liquid state variations. To minimize such leakage, measures are taken such that, for example, labyrinth seals are provided in multiple stages, or a labyrinth seal is arranged in a position sufficiently spaced away from a liquid source. However, according to such measures, the overall size of the rotary electrical machine has to be increased, and also the seal performance is not sufficient, so that it is difficult to prevent leakage of the fluid.

In recent years, in order to solve these problems, techniques are known that use brush seals to improve seal performance (for example, refer to Jpn. Pat. Appln. KOKAI Publication Nos. 2001-90842, 2001-295609, and 2002-303371. However, the techniques disclosed in Jpn. Pat. Appln. KOKAI Publication Nos. 2001-90842 and 2001-295609 are not intended to seal liquid but intended to seal gases.

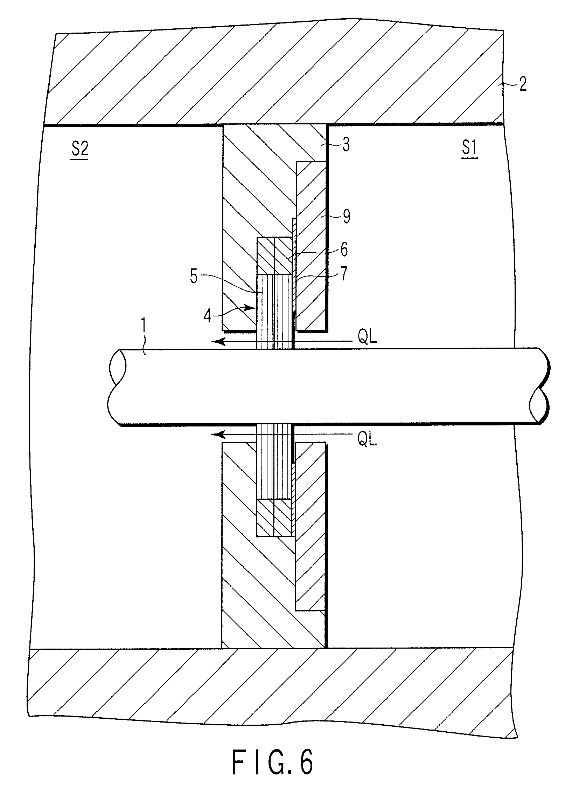

In general, a conventional liquid-sealing shaft seal apparatus of a rotary electrical machine, which uses a brush seal, has a structure shown in FIG. 6. In FIG. 6, numeral 1 denotes a rotation shaft, and numeral 2 denotes a frame forming the exterior of the rotary electrical machine. The rotation shaft 1 is rotatably journaled by bearings (not shown) mounted on the frame 2. Numeral 3 denotes a brush holder. The brush holder 3 is robustly and hermetically fixed to the frame 2, and is mounted in such a manner as to close a space of the liquid atmosphere S1 (or, "liquid atmosphere space", hereafter) and a space of the non-liquid atmosphere S2 (or, "non-liquid atmosphere space", hereafter) in the rotary electrical machine. Numeral 4 denotes a brush seal formed in the manner that a brush 5 is clamped by a brush clamp 6. The brush seal 4 is configured such that multiple seal segments circumferentially split are combined into an annular state array, and that two arrays are arranged by circumferentially shifting split planes of the segments. Numeral 7 denotes packing formed similarly as the brush seal 4 such that multiple packing segments circumferentially split are combined in an annular state. The packing 7 thus formed is so mounted on an axial sidewall of the brush seal 4 that the sprit planes of the packing segments are circumferentially shifted with respect to those of the brush seal segments. Numeral 9 denotes a holding plate fixed with a bolt (not shown) on an axial sidewall of the brush holder 3 in order to fix the brush seal 4 and the packing 7 on the brush holder 3. In this case, although a single-stage brush seal apparatus has been shown and described, an example having multiple brush seal assemblies arranged in multiple stages is disclosed in Jpn. Pat. Appln. KOKAI Publication No. 2001-295609.

In any of Jpn. Pat. Appln. KOKAI Publication Nos. 2001-90842, 2001-295609, and 2002-303371, the structure of the brush seal apparatus itself is not described in detail, however, it is assumed that the shaft seal apparatus uses such a conventional brush seal of the type as described with reference to FIG. 6. Therefore, the liquid-sealing shaft seal apparatus thus constructed is not capable of completely preventing leakage of a small amount of liquid through gaps of element lines of the brush 5 constituting the brush seal 4 and through a contact face gap between the brush 5 and the rotation shaft 1. For this reason, a case can arise in which a total leaked liquid amount exceeds an allowable amount in a long time operation of the rotary electrical machine, thereby causing, for example, overflow from the interior of the rotary electrical machine or a problem in the operation of the rotary electrical machine. In addition, in the case where, for example, the rotation shaft has vibrated or the brush seal has been eccentrically mounted with respect to the rotation shaft, a case can arise in which the amount of leakage of the liquid is increased and exceeds the allowable amount in a relatively short time. Resultantly, even a case can arise in which the rotary electrical machine cannot be operated at all.

In addition, there is a rotary electrical machine of the type that has different liquids and that uses a shaft seal apparatus to avoid mixture of the liquids. For example, in the construction shown in FIG. 6, a liquid different from a liquid contained in the atmosphere space S1 can be contained in the atmosphere space S2. With such the conventional liquid-sealing shaft seal apparatus, the liquid leaks little by little from one of the atmosphere spaces S1 and S2 to the other, and a case takes place in which the different liquids are mixed with one another during operation over a long time, thereby hindering the operation of the rotary electrical machine. Also with the structure provided with the multiple-stage brush seals according to Jpn. Pat. Appln. KOKAI Publication No. 2001-295609, liquid leakage little by little cannot be prevented, so that the leaked liquid fills over time in one of the brush-seal spaces between the multiple-stage brush seals, and the liquid leaks to the next brush seal space, thus resulting serial leakage. Thus, with the conventional brush-seal type shaft seal apparatus, it is very difficult to prevent liquid leakage little by little even in the construction having multiple-stage brush seals arranged.

The present invention has been made to solve the above-described problems, and an object of the invention is to provide a liquid-sealing shaft seal apparatus and a rotary electrical machine using the shaft seal apparatus, the shaft seal apparatus being capable of minimizing the amount of leakage of a liquid existing in a liquid atmosphere to a non-liquid atmosphere space of a rotary machine.

Another object of the invention is to provide a liquid-sealing shaft seal apparatus and a rotary electrical machine using the shaft seal apparatus, the shaft seal apparatus being capable of minimizing the amount of a mixture of different liquids in a rotary machine containing the different liquids.

According to one aspect of the present invention, there is provided a liquid-sealing shaft seal apparatus comprising: a rotation shaft; a plurality of brush seals arranged in such a manner as to contact and surround the rotation shaft; and a brush holder which holds the brush seals, wherein the brush seals are arranged through a cavity in an axial direction of the rotation shaft, and the brush holder is provided with a liquid returning pass to return a liquid having leaked through the brush seals into the cavity to the side of an atmosphere in which a liquid is present as a sealing target.

According to another aspect of the present invention, there is provided a liquid-sealing shaft seal apparatus comprising: a rotation shaft; a plurality of brush seals arranged in such a manner as to contact and surround the rotation shaft; and a brush holder which holds the brush seals, wherein the brush seals are arranged through a cavity in an axial direction of the rotation shaft; and a pressure in the cavity is higher than a pressure on the side of an atmosphere in which a liquid is present as a sealing target.

According to the present invention, the amount of leakage liquid leaking through the brush seal can be reduced, and the leakage liquid having leaked to the side of the non-liquid atmosphere through the brush seal on the side of the liquid atmosphere can be returned to the liquid atmosphere space through the liquid returning pass. Consequently, the amount of liquid leaking through the brush seal and accumulated in the liquid atmosphere space can be significantly reduced.

Further, leakage liquids having leaked through the brush seals on the sides of the respective liquid atmospheres can be accumulated without causing dispersion thereof, and can be returned to the spaces on the sides of the liquid atmospheres through the respective liquid returning passes. Consequently, the amounts of liquids having leaked through the brush seals and accumulated in the spaces on the sides of the liquid atmospheres can be significantly reduced. Further, contamination by a different liquid can be significantly reduced.

This summary of the invention does not necessarily describe all necessary features so that the invention may also be a sub-combination of these described features.

The invention can be more fully understood from the following detailed description when taken in conjunction with the accompanying drawings, in which:
FIG. 1A is an axial cross-sectional view of a liquid-sealing shaft seal apparatus in a rotary electrical machine according to a first embodiment of the present invention;
FIG. 1B is a perspective view of a portion taken from FIG. 1A;
FIG. 2 is an axial cross-sectional view of a liquid-sealing shaft seal apparatus in a rotary electrical machine according to a second embodiment of the present invention;
FIG. 3 is an axial cross-sectional view of a liquid-sealing shaft seal apparatus in a rotary electrical machine according to a third embodiment of the present invention;
FIG. 4 is an axial cross-sectional view of a liquid-sealing shaft seal apparatus in a rotary electrical machine according to a fourth embodiment of the present invention;
FIG. 5 is an axial cross-sectional view of a liquid-sealing shaft seal apparatus in a rotary electrical machine according to a fifth embodiment of the present invention; and
FIG. 6 is an axial cross-sectional view on an example of a conventional shaft seal apparatus.

Embodiments of the present invention will be described herebelow with reference to the accompanying drawings.

### (First Embodiment)

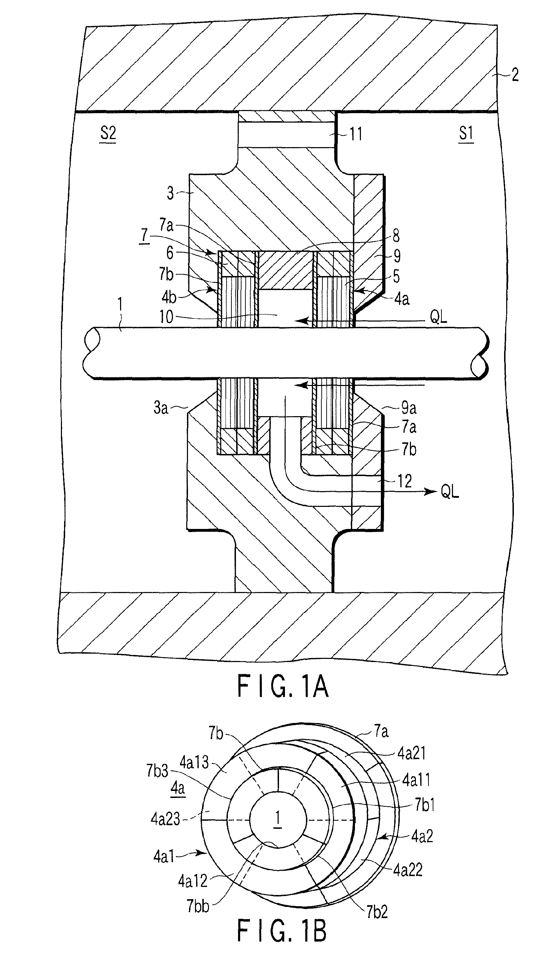

FIG. 1A is an axial cross-sectional view of a liquid-sealing shaft seal apparatus in a rotary electrical machine according to a first embodiment of the present invention.

Referring to FIG. 1A, numeral 1 denotes a rotation shaft, and numeral 2 denotes a frame forming the exterior of a rotary electrical machine. The rotation shaft 1 is rotatably journaled by bearings (not shown) mounted to the frame 2. Numeral 3 is a brush holder. The brush holder 3 is robustly and hermetically fixed to the frame 2, and is mounted in such a manner as to close a liquid atmosphere space S1 and a non-liquid atmosphere space S2 in the rotary electrical machine.

In space portions on the side of a bore of the brush holder 3 in the axial direction, two brush seals spaced away from each other via a cavity 10 to be described later are stored. Namely, there are stored two-stage brush seals formed of a brush seal 4a on the side of the liquid atmosphere S1 and a brush seal 4b on the side of the non-liquid atmosphere S2. The brush seals 4a, 4b each are formed in the manner that a brush 5 is clamped by a brush clamp 6. The brush seal 4a, 4b each is formed such that multiple brush segments circumferentially split are combined into an annular state as an array, and that two arrays are arranged by shifting circumferentially split planes of the brush segments.

For example, with reference to FIG. 1B, the brush seal 4a has a structure formed of two brush seal discs 4a1 and 4a2 overlapped with each other. The one brush seal disc 4a1 is formed of tri-sectional brush seal pieces or segments 4a11, 4a12, and 4a13 circumferentially split. Similarly, the other brush seal disc 4a2 is formed of tri-sectional brush seal pieces or segments 4a21, 4a22, and 4a23. A respective split plane of the brush seal disc 4a1, such as a split plane between the brush seal pieces 4a11 and 4a13, and a respective split plane of the other brush seal disc 4a2, such as a split plane between the brush seal pieces 4a21 and 4a22 are shifted by, for example, 60 degrees from each other in the circumferential direction.

In FIG. 1A, numeral 7 denotes a resin sheet packing formed of a resin sheet, such as Teflon (registered trademark). More specifically, the respective packing 7 is formed such that, similarly as the brush seal, multiple segments circumferentially split are combined in an annular state, and is mounted on each of axial sidewalls on both sides of the respective brush seals 4a, 4b such that an initial gap thereof with the rotation shaft 1 is zero. For example, as shown in FIG. 1B, a packing plate 7b of the packing 7 is so mounted on an axial sidewall of the brush seal 4a that the sprit planes of the packing segments 7b1, 7b2 and 7b3 are circumferentially shifted with respect to those of the segments 4a11, 4a12 and 4a13 of the brush seal 4a. The packing plate 7b has a bore 7bb contacting with the rotation shaft 1, and the packing plate 7a is formed in the similar manner as the plate 7b. Numeral 8 denotes a spacer inserted in an axial portion between the brush seals 4a and 4b axially provided in the two stages. Numeral 9 denotes a holding plate fixed with a bolt (not shown) on an axial sidewall of the brush holder 3 to fix the brush seals 4a and 4b, packing 7, and spacer 8, which are stored in the brush holder 3, into the brush holder 3.

Numeral 10 denotes a cavity as described above, which is provided by the spacer 8 between the brush seals 4a and 4b axially provided in the two stages. The cavity 10 is a space having an external diameter larger than that of the sealing plane which can reduce the flow of gas along the periphery of the rotation shaft 1 generated with the rotation of the rotation shaft 1. Numeral 11 denotes a through-hole provided on the side of the external diameter of the brush holder 3. The through-hole 11 is configured to allow communication of pressure between the axial atmosphere spaces S1 and S2 of the rotary electrical machine separated by the brush holder 3, thereby to keep the pressures therein equal. Numeral 12 is a liquid returning pass that continuously extends through the spacer 8, the brush holder 3, and the holding plate 9. The liquid returning pass 12 is thus formed to return liquid QL, which has leaked into the cavity 10 from the liquid atmosphere space S1, to the liquid atmosphere space S1. Exterior portions of an axial-end bore portion 3a of the brush holder 3 and a bore portion 9a of the holding plate 9, respectively, are largely chamfered. This prevents liquid from accumulating in gaps between the respective exterior portions and the rotation shaft 1, but falls down under gravity.

Operation of the present embodiment will be described herebelow.

While the liquid atmosphere space S1 in the interior of the frame 2 of the rotary electrical machine enters the state in which the liquid is dispersed by the rotation of the rotation shaft 1, a large amount of dispersing liquid is sealed by the brush seal 4 on the liquid atmosphere S1. However, part of the dispersing liquid passes through, for example, gaps between the brushes 5 of the brush seal 4a and between the brushes 5 and the rotation shaft 1 and leaks as a leakage liquid QL into the cavity 10. In this event, the resin sheet packing 7 is deformed by the holding plate 9 being press tightened against the brush holder 3, thereby to seal gaps with the brush holder 3, the holding plate 9, and the brush clamp 6. Consequently, liquid leakage from a gap between the rear face of the brush seal 4a and the brush holder 3 can be prevented. In addition, since the initial gap with the rotation shaft 1 is set to zero, initial abrasion is caused when the rotation shaft 1 rotates. Thereby, the gaps with the rotation shaft 1 and the resin sheet packing 7 are reduced to minimum gaps in size set in consideration factors including, for example, whirling resulting from eccentricity and the like of the rotation shaft 1, and the area of contact between the liquid and the brush 5 of the brush seal 4a is minimized. Therefore, since the liquid is permeated into the brush 5 of the brush seal 4a, the amount of the liquid QL leaking into the cavity 10 is significantly reduced. Moreover, since the cavity 10 exists, the leaked leakage liquid is not influence by the rotation of the rotation shaft 1, but falls in the gravitation direction and then flows into the liquid returning pass 12, whereby the liquid QL is returned into the liquid atmosphere space S1.

In addition, the liquid atmosphere space S1 and the non-liquid atmosphere space S2 are in communication with each other through the through-hole 11, so that the pressure is the same in the spaces S1 and S2. Accordingly, no differential pressure is applied to the brush seal 4a, 4b, so that the amount of leakage liquid QL is not increased. Further, since the axial-end bore portion 3a of the brush holder 3 and the bore portion 9a of the holding plate 9 are largely chamfered to form an inclined plane, the liquid does not accumulates in the gaps between the respective chamfered portions and the rotation shaft 1. Consequently, the amount of liquid possibly in contact with the brush 5 of the brush seal 4a can be reduced.

As described above, according to the present embodiment, it is possible to reduce the amount of leakage liquid QL leaking through the brush seal 4a through the resin sheet packing 7, the axial-end bore portion 3a of the brush holder 3, the bore portion 9a of the holding plate 9, and the through-hole 11. Further, with the cavity 10 being arranged, the leakage liquid having leaked through the brush seal 4a on the side of the liquid atmosphere is prevented from dispersing in the cavity 10, but is guided to fall along the gravitation direction. Thereby, the liquid QL can be returned to the liquid atmosphere space S1 through the liquid returning pass 12. Consequently, the amount of liquid leaking into the non-liquid atmosphere space S2 through the brush seal 4b can be significantly reduced.

### (Second Embodiment)

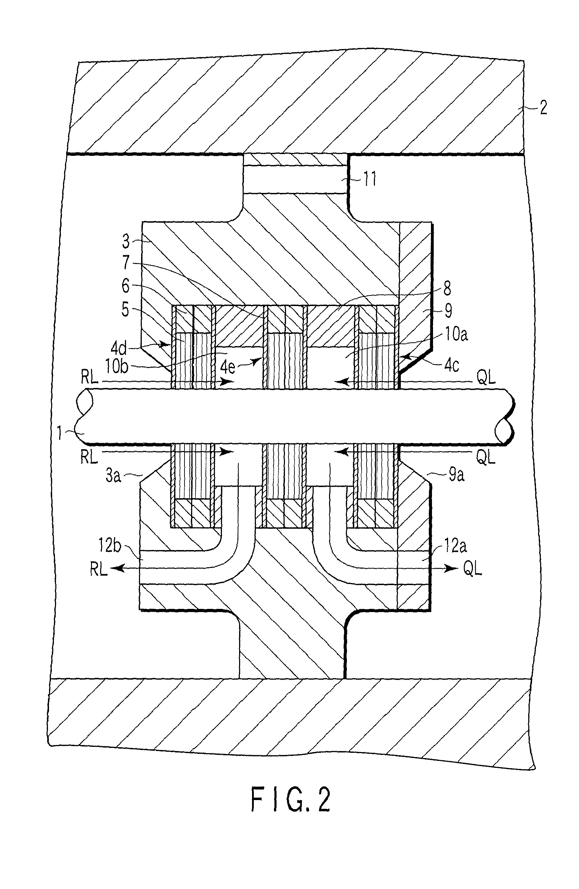

FIG. 2 is an axial cross-sectional view of a liquid-sealing shaft seal apparatus in a rotary electrical machine according to a second embodiment of the present invention. Like reference characters are used in the drawing and description for portions identical to those in the first embodiment shown in FIG. 1.

Referring to FIG. 2, numeral 3 is a brush holder robustly and hermetically fixed to the frame 2, and is mounted in such a manner as to close a liquid atmosphere space Q and a liquid atmosphere space R in the rotary electrical machine. In space portions on the side of the bore of the brush holder 3 in the axial direction, three brush seals spaced away from one another via cavities 10a and 10b to be described later are stored. Namely, there are stored three-stage brush seals formed of a brush seal 4c on the side of the liquid atmosphere Q, a brush seal 4d on the side of the liquid atmosphere R, and an inbetween-stage brush seal 4e. Similarly as shown in FIG. 1B, the brush seals 4c, 4d, and 4e each is formed in the manner that the brush 5 is clamped by the brush clamp 6. The brush seals 4c, 4d, and 4e each is formed such that multiple brush segments circumferentially split are combined into an annular state, and that two arrays are arranged by circumferentially shifting split planes of the respective brush segments from each other. Numeral 7 denotes resin sheet packing plates each formed of a resin sheet, such as Teflon (registered trademark). More specifically, the respective packing 7 is formed such that, similarly as the brush seal, multiple packing segments split in the circumferential direction are combined in an annular state. The resin sheet packing 7 is so mounted on each of axial sidewalls on both sides of the respective three-stage brush seals 4c, 4d, and 4e that the sprit planes of the packing segments are circumferentially shifted with respect to those of the brush seal segments and that an initial gap thereof with the rotation shaft 1 is zero. Numeral 8 denotes a spacer inserted in each of axial inbetween portions of the brush seals 4d, 4e and 4c arranged in the three stages in the axial direction. Numeral 9 denotes a holding plate, which is fixed with a bolt (not shown) on an axial sidewall of the brush holder 3 to fix the brush seals 4d, 4e, and 4c, the resin sheet packing 7, and the spacer 8, which are stored in the brush holder 3, into the brush holder 3. Numerals 10a and 10b, respectively, denote the cavities as mentioned above, which are provided in respective inbetween portions of the brush seals 4d, 4e and 4c arranged in the three stages in the axial direction. The cavities 10a, 10b each is a space having an external diameter larger than that of the brush seals for reducing the flow of gas in the periphery of the rotation shaft 1 generated in conjunction with the rotation of the rotation shaft 1. Numeral 11 denotes a through-hole provided on the side of the external diameter of the brush holder 3. The through-hole 11 is formed to allow communication of pressure between the axial atmosphere spaces Q and R of the rotary electrical machine which are separated by the brush holder 3, thereby to keep the pressures on both outer sides of the brush seals 4a, 4b equal. Numerals 12a and 12b, respectively, are liquid returning passes of return liquids QL and RL. The liquid returning pass 12a on one side continuously extends through the spacer 8, brush holder 3, and holding plate 9 toward the side of the liquid atmosphere Q from the cavity 10a on the side of the liquid atmosphere Q, which is one of the two cavities located in the axial direction. The liquid returning pass 12b on the other side continuously extends through the spacer 8 and brush holder 3 toward the side of the liquid atmosphere R from the cavity 10b on the side of the liquid atmosphere R, which is the other one of the two cavities located in the axial direction. The inner diameter side shape of the axial-end portion 3a of the brush holder 3 and the inner diameter side shape of the axial-end portion 9a of the holding plate 9, respectively, are largely chamfered to form inclined planes.

Operation of the present embodiment will be described herebelow.

The present embodiment of the liquid-sealing shaft seal apparatus in the rotary electrical machine, which is constructed as described above, operates as follows. While the liquid QL in the liquid atmosphere Q is dispersed in the liquid atmosphere space Q in conjunction with the rotation of the rotation shaft 1, the gap is sealed by the brush seal 4c on the side of liquid atmosphere Q. In this case, as in the first embodiment, the amount of the leakage liquid QL leaking from the brush seal 4c on the side of the liquid atmosphere Q is reduced to be smaller than in the conventional techniques. This is implemented by the functions of the resin sheet packings 7, the shape of the brush-holder axial-end bore portion 3a, and the structure including the through-hole 11. In addition, by virtue of the cavity 10a, the leakage liquid QL having leaked into the cavity 10a does not disperse in the cavity 10a, but is guided to flow down under gravity, whereby the liquid is returned into the liquid atmosphere space Q through the returning pass 12a for the liquid QL. Consequently, the amount of leakage liquid QL leaking through the brush seal 4e to the side of the cavity 10b is significantly reduced.

On the other hand, while the liquid on the side of the liquid atmosphere R is dispersed in the liquid atmosphere space R in conjunction with the rotation of the rotation shaft 1, the gap is sealed by the brush seal 4d on the side of liquid atmosphere R. In this case, however, similarly as in the case of the brush seal 4c on the side of the liquid atmosphere Q, the amount of leakage liquid RL leaking from the brush seal 4d on the side of the liquid atmosphere R is smaller than in the conventional techniques. This is implemented by the functions of the resin sheet packings 7, the shape of the bore portion 9a of the holding plate 9, and the structure including the through-hole 11. In addition, by virtue of the cavity 10b, the leakage liquid RL having leaked into the cavity 10b does not disperse in the cavity 10a, but is guided to flow down under gravity, whereby the liquid is returned into the liquid atmosphere space R through the returning pass 12b for the liquid RL. Consequently, the amount of leakage liquid RL leaking through the brush seal 4e to the side of the cavity 10b is significantly reduced.

As described above, according to the present embodiment, the respective amounts of leakage liquid leaking through the brush seal 4e can be reduced. This is implemented by the functions of the resin sheet packings 7, the shapes of the axial-end bore portion 3a of the brush holder 3 and the bore portion 9a of the holding plate 9, and the structure including the through-hole 11. In addition, by virtue of cavities 10a, 10b, the respective leakage liquids QL, RL having leaked through the brush seals 4c, 4d on the liquid atmosphere do not disperse in the cavities 10a, 10b, but flows down in the gravitation direction, whereby the liquids can be returned into the liquid atmosphere spaces Q, R through the liquid returning passes 12a, 12b. Consequently, the amount of leakage liquid leaking through the brush seal 4e to the other liquid atmosphere space, and the amount of mixture between the liquids Q and R can be significantly reduced.

### (Third Embodiment)

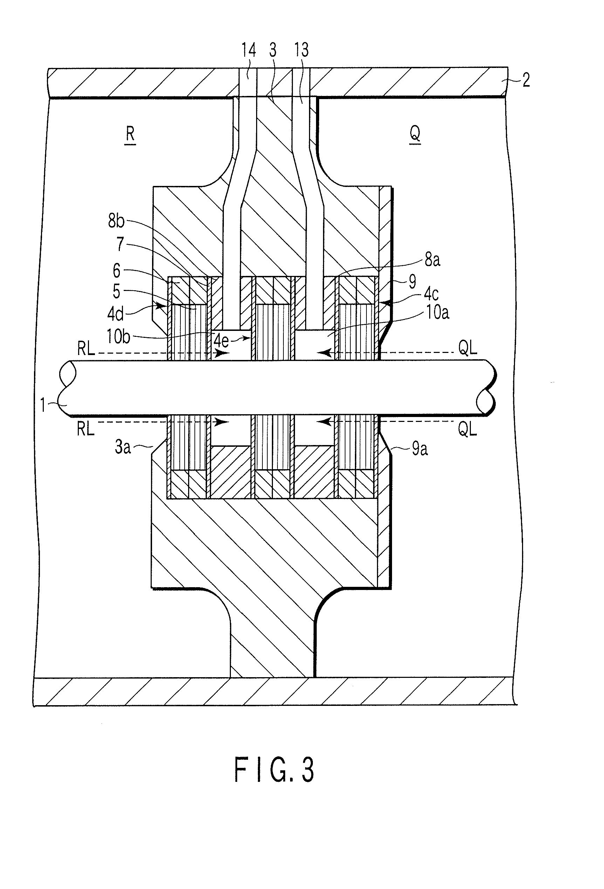

FIG. 3 is an axial cross-sectional view of a liquid-sealing shaft seal apparatus in a rotary electrical machine a third embodiment of according to the present invention. Like reference characters are used in the drawing and description for portions identical to those in the first embodiment shown in FIG. 1.

Referring to FIG. 3, numeral 1 denotes a rotation shaft, numeral 2 denotes a frame, and numeral 3 is a brush holder. The brush holder 3 is robustly, hermetically fixed to the frame 2, and is mounted in such a manner as to close a liquid atmosphere space Q and a liquid atmosphere space R in the rotary electrical machine. In space portions on the side of the bore of the brush holder 3 in the axial direction, three brush seals spaced away from one another via cavities 10a and 10b to be described later are stored. Namely, there are stored three-stage brush seals formed of a brush seal 4c on the side of the liquid atmosphere Q, a brush seal 4d on the side of the liquid atmosphere R, and an inbetween-stage brush seal 4e. Similarly as shown in FIG. 1B, the brush seals 4c, 4d, and 4e each are formed in the manner that the brush 5 is clamped by the brush clamp 6. The brush seals 4c, 4d, and 4e each are formed such that multiple segments circumferentially split are combined into an annular state, and that two arrays are arranged by circumferentially shifting split planes from each other. Numeral 7 denotes resin sheet packings each formed of a resin sheet. More specifically, the respective packing 7 is formed such that, similarly as the brush seal, multiple packing segments split in the circumferential direction are combined in an annular state. Each of the resin sheet packings 7 is so mounted on axial sidewalls of the respective three-stage brush seals 4c, 4d, and 4e that the split planes of the packing segments are circumferentially shifted with respect to those of the brush seal segments and that an initial gap thereof with the rotation shaft 1 is zero. Numerals 8a, 8b denote spacers each inserted in each of axial inbetween portions of the brush seals 4d, 4e and 4c arranged in the three stages in the axial direction. Numeral 9 denotes a holding plate, which is fixed with a bolt (not shown) on an axial sidewall of the brush holder 3 to fix the brush seals 4c, 4d, and 4e, the resin sheet packing 7, and the spacers 8a and 8b, which are stored in the brush holder 3, into the brush holder 3. Numerals 10a and 10b, respectively, denote the cavities as mentioned above, which are provided in respective inbetween portions of the brush seals 4c, 4d and 4e provided in the three stages in the axial direction. The cavities 10a, 10b each are a space having an external diameter larger than that of the seal plate for reducing the flow of gas in the periphery of the rotation shaft 1 generated in conjunction with the rotation of the rotation shaft 1. Numeral 13 denotes a cavity through-hole provided to continuously pass through the spacer 8a, the brush holder 3, the frame 2, and further to extend to the exterior of the frame 2 of the rotary electrical machine from the cavity 10a on the side the liquid atmosphere Q. Numeral 14 denotes another cavity through-hole provided to continuously pass through the spacer 8b, the brush holder 3, the frame 2, and further to extend to the exterior of the frame 2 of the rotary electrical machine from the cavity 10b on the side the liquid atmosphere R.

Operation of the present embodiment will be described herebelow.

The present embodiment of the liquid-sealing shaft seal apparatus in the rotary electrical machine, which is constructed as described above, operates as follows. While the liquid in the liquid atmosphere Q is dispersed in the liquid atmosphere space Q in conjunction with the rotation of the rotation shaft 1, the gap is sealed by the brush seal 4c on the side of liquid atmosphere Q. In this case, as in the first embodiment, the amount of the leakage liquid QL leaking from the brush seal 4c on the side of the liquid atmosphere Q into the cavity 10a is reduced to be smaller than in the conventional techniques by the functions of the resin sheet packings 7. In addition, when a pressure higher than that in the liquid atmosphere space Q is applied to the cavity 10a through the cavity through-hole 13 from the outside of the rotary electrical machine, a pressure in the reverse direction with respect to the leakage direction of the leakage liquid QL is exerted on the brush seal 4c. Thereby, the leakage liquid QL having leaked through, for example, the gap with the brush 5 constituting the brush seal 4c and the gap between the brush 5 and the rotation shaft 1 is returned to the liquid atmosphere space Q. Consequently, the leakage liquid QL is significantly reduced in amount, and does not accumulate in the cavity 10a.

On the other hand, while the liquid in the liquid atmosphere R disperses in the liquid atmosphere space R in conjunction with the rotation of the rotation shaft 1, the gap is sealed by the brush seal 4d on the side of liquid atmosphere R. In this case, as in the first embodiment, the amount of leakage liquid RL leaking from the brush seal 4d on the side of the liquid atmosphere R into the cavity 10b is reduced to be smaller than in the conventional techniques by the functions of the resin sheet packings 7. In addition, when a pressure higher than that in the liquid atmosphere space R is applied to the cavity 10b through the cavity through-hole 14 from the outside of the rotary electrical machine, a pressure in the reverse direction with respect to the leakage direction of the leakage liquid RL is exerted on the brush seal 4d. Thereby, the leakage liquid RL having leaked through, for example, the gap with the brush 5 constituting the brush seal 4d and the gap between the brush 5 and the rotation shaft 1 is returned to the liquid atmosphere space R. Consequently, the leakage liquid RL is significantly reduced in amount, and does not accumulate in the cavity 10b.

In a general rotary electrical machine, a cooling fan is provided for intra-machine ventilation, so that the intra-machine pressure is negative with respect to the atmospheric pressure. In this case, through-holes corresponding to the cavity through-holes 13 and 14 are opened to the atmosphere, so that the pressure is increased, whereby effects equivalent to the case of pressurization can be obtained.

As described above, according to the present embodiment, in addition to the effects of the resin sheet packings 7, the cavity through-holes 13 and 14 are either applied with pressure or opened to the atmosphere. In this case, the brush seals 4c and 4d, respectively, are applied with pressure differences in the reverse direction with respect the leakage directions of the leakage liquids QL and RL. Consequently, the respective liquids do not leak through the brush seal 4e into the cavities 10a and 10b, nor do the respective liquids mix into one another. Further, when the cavity through-holes 13 and 14 are opened to the atmosphere, a compressor is not necessary, thereby simplifying the construction and reducing the cost thereof.

### (Fourth Embodiment)

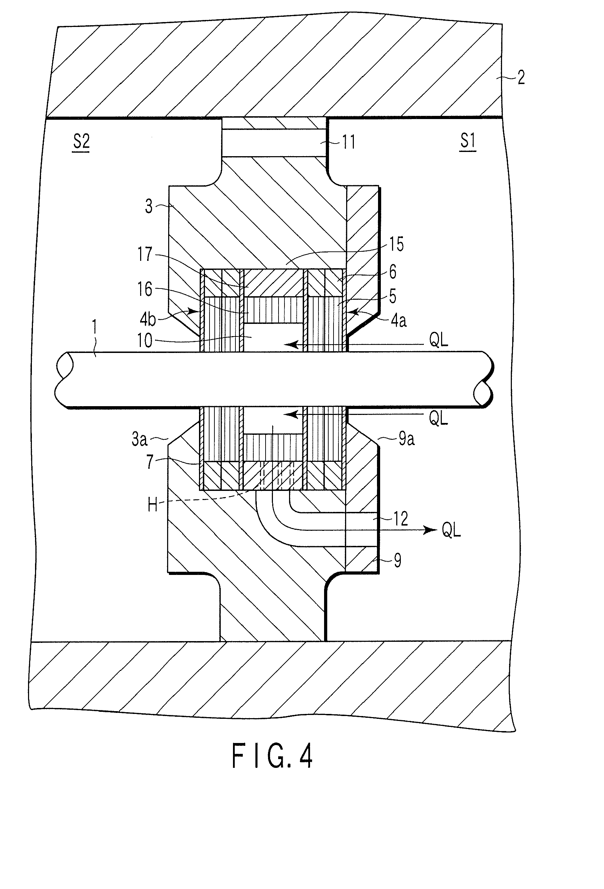

FIG. 4 is an axial cross-sectional view of a liquid-sealing shaft seal apparatus in a rotary electrical machine according to a fourth embodiment of the present invention. Like reference characters are used in the drawing and description for portions identical to those in the first embodiment shown in FIG. 1.

Referring to FIG. 4, numeral 1 denotes a rotation shaft, and numeral 2 denotes a frame. Numeral 3 is a brush holder robustly and hermetically fixed to the frame 2. The brush holder 3 is mounted in such a manner as to close a liquid atmosphere space S1 and a non-liquid atmosphere space S2 in the rotary electrical machine. In space portions on the side of the bore of the brush holder 3 in the axial direction, two brush seals spaced away from each other via a cavity 10 to be described later are stored. Namely, there are stored two-stage brush seals formed of a brush seal 4a on the side of the liquid atmosphere S1 and a brush seal 4b on the side of the non-liquid atmosphere S2. Similarly as shown in FIG. 1B, the brush seals 4a, 4b are each formed in the manner that the brush 5 is clamped by the brush clamp 6. The brush seals 4a, 4b are each formed such that multiple segments circumferentially split are combined into an annular state, and that two arrays are arranged by circumferentially shifting split planes from each other. Numeral 7 denotes a resin sheet packing formed of a resin sheet. More specifically, the respective packing 7 is formed such that, similarly as the brush seals 4a, 4b, multiple packing segments split in the circumferential direction are combined in an annular state. The resin sheet packing 7 is so mounted on each of axial sidewalls on both sides of the respective two-stage brush seals 4a and 4b that the split planes of the packing segments are circumferentially shifted with respect to those of the brush seal segments and that an initial gap thereof with the rotation shaft 1 is zero. Numeral 15 denotes a short brush seal that has a length not contacting the rotation shaft 1. Preferably, the short brush seal 15 is formed such that a short brush clamp 17 clamps the external diameter side of a short brush 16. In this case, the short brush 16 has a length enabling forming the cavity 10 that serves as a space that reduces the flow of gas in the periphery of the rotation shaft 1 which is generated in conjunction with the rotation of the rotation shaft 1. As the above-described brush seal, the short brush seal 15 is formed such that multiple segments split in the circumferential direction are combined in an annular state, and is mounted in an axial portion between the brush seals 4a and 4b arranged in the two stages in the axial direction. The short brush clamp 17 has multiple holes H in the radial direction. Numeral 11 denotes a through-hole to communicate between the same spaces S1 and S2 as in the first embodiment in FIG. 1. Numeral 12 is a liquid returning pass that continuously extends through the brush holder 3 and the holding plate 9 from the rear face of the short brush seal 15 to the liquid atmosphere space S1. Also the shapes the brush-holder axial-end bore portion 3a of the brush holder 3 and the bore portion 9a of the holding plate 9 are the same as in the first embodiment shown in FIG. 1.

Operation of the present embodiment will be described herebelow.

The present embodiment of the liquid-sealing shaft seal apparatus in the rotary electrical machine, which is constructed as described above, operates as follows. While the liquid in the liquid atmosphere S1 is dispersed in the liquid atmosphere space S1 in conjunction with the rotation of the rotation shaft 1, the gap is sealed by the brush seal 4a on the side of liquid atmosphere S1. In this case, as in the first embodiment, the amount of leakage liquid leaking from the brush seal 4a on the side of the liquid atmosphere S1 into the cavity 10 is reduced to be smaller than in the conventional techniques by the functions of the resin sheet packings 7 and the shape of the bore portion 9a of the holding plate 9. In addition, most of the liquid having leaked to the cavity 10 is captured by the short brush 16, and permeates into the short brush 16 through capillarity or capillary action. The short brush 16 has a length not contacting the rotation shaft 1. The liquid permeated in the short brush 16 is directed under gravity to flow downward along the short brush clamp 17, and then is returned to the liquid atmosphere space S1 through the liquid returning pass 12 from the holes H in the radial direction provided in the short brush clamp 17. Consequently, the liquid leaking through the brush seal 4b into the non-liquid atmosphere space S2 is significantly reduced.

As described above, according to the present embodiment, in addition to the effects of the resin sheet packings 7 and the shape of the bore portion 9a of the holding plate 9, even a small amount of liquid having leaked through the brush seal 4a is securely trapped by the short brush seal 15 provided in the cavity 10, and then is returned to the liquid atmosphere space S1 by using the liquid returning pass 12. Consequently, liquid sealing performance in the case of a rotary electrical machine containing the liquid is significantly improved. Further, even mist-state liquid can be securely captured through the capillary action of the short brush 16. Consequently, advantages can be obtained in that the size of the cavity 10 can be reduced, and hence the overall size of the brush seal apparatus can be reduced.

### (Fifth Embodiment)

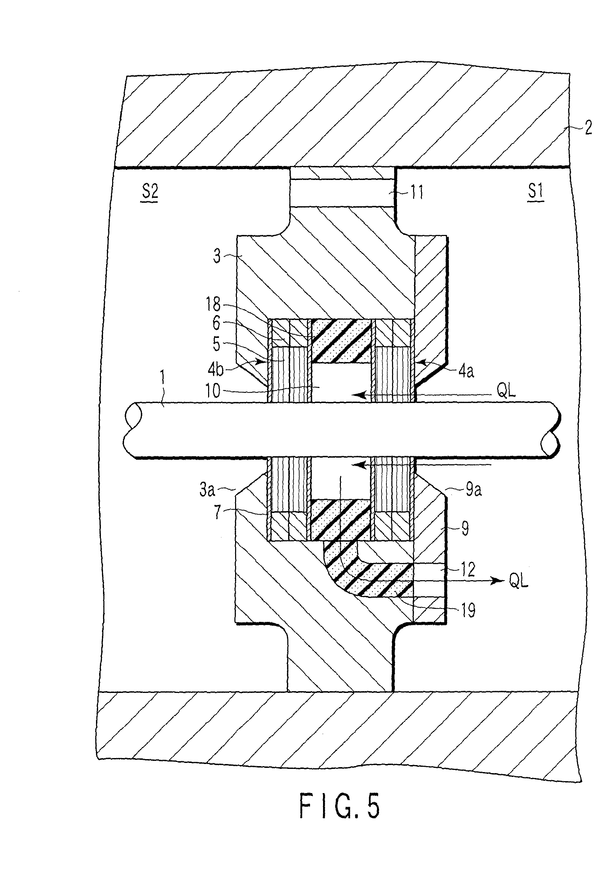

FIG. 5 is an axial cross-sectional view of a liquid-sealing shaft seal apparatus in a rotary electrical machine according to a fifth embodiment of the present invention. Like reference characters are used in the drawing and description for portions identical to those in the first embodiment shown in FIG. 1.

Referring to FIG. 5, numeral 1 denotes a rotation shaft, and numeral 2 denotes a frame. Numeral 3 is a brush holder robustly and hermetically fixed to the frame 2. The brush holder 3 is mounted in such a manner as to close a liquid atmosphere space S1 and a non-liquid atmosphere space S2 in the rotary electrical machine. In space portions on the side of the bore of the brush holder 3 in the axial direction, two brush seals spaced away from each other via a cavity 10 to be described later are stored. Namely, there are stored two-stage brush seals formed of a brush seal 4a on the side of the liquid atmosphere S1 and a brush seal 4b on the side of the non-liquid atmosphere S2. Similarly as shown in FIG. 1B, the brush seals 4a, 4b are each formed in the manner that the brush 5 is clamped by the brush clamp 6. The brush seals 4a, 4b are each formed such that multiple segments circumferentially split are combined into an annular state, and that two arrays are arranged by circumferentially shifting split planes from each other. Numeral 7 denotes a resin sheet packing formed of a resin sheet. More specifically, the respective packing 7 is formed such that, similarly as the brush seals 4a, 4b, multiple packing segments split in the circumferential direction are combined in an annular state. The resin sheet packing 7 is so mounted on each of axial sidewalls on both sides of the respective two-stage brush seals 4a and 4b that the split planes of the packing segments are circumferentially shifted with respect to those of the brush seal segments and that an initial gap thereof with the rotation shaft 1 is zero. Numeral 18 denotes a spacer formed of a porous material, and is inserted between the brush seals 4a and 4b arranged in two stages in the axial direction. Numeral 9 denotes the same holding plate as that shown in FIG. 1. Numeral 10 denotes the cavity as described above, which has an external diameter larger than that of the seal plane for reducing the flow of gas in the periphery of the rotation shaft 1 generated with the rotation of the rotation shaft 1 in a space surrounded by the resin sheet packings 7, which is defined by the sidewalls of the brush seal, the rotation shaft 1, and the porous spacer 18. Numeral 11 denotes the same through-hole as that in the first embodiment shown in FIG. 1. Numeral 12 is the same liquid returning pass as that in the fourth embodiment shown in FIG. 4, and a porous material 19 is filled therein.

Operation of the present embodiment will be described herebelow.

The present embodiment of the liquid-sealing shaft seal apparatus in the rotary electrical machine, which is constructed as described above, operates as follows. While the liquid in the liquid atmosphere S1 is dispersed in the liquid atmosphere space S1 in conjunction with the rotation of the rotation shaft 1, the gap is sealed by the brush seal 4a on the side of liquid atmosphere S1. In this case, as in the first embodiment, the amount of the leakage liquid QL leaking from the brush seal 4a on the side of the liquid atmosphere S1 into the cavity 10 is reduced to be smaller than in the conventional techniques by the functions of the resin sheet packings 7 and the shape of the bore portion 9a of the holding plate 9. In addition, most of the liquid having leaked into the cavity 10 is captured by the porous spacer 18 arranged on the side of the external diameter of the cavity 10. The liquid thus captured is directed under gravity to flow downward through the interior of the porous spacer 18, and then is returned to the liquid atmosphere space S1 through the porous filler material 19 filled into the liquid returning pass 12 arranged below the cavity 10. Consequently, the amount of liquid leaking through the brush seal 4b into the non-liquid atmosphere space S2 is significantly reduced.

As described above, according to the present embodiment, in addition to the effects of the resin sheet packings 7 and the porous filler material 19, even a small amount of liquid having leaked through the brush seal 4a is securely captured by the porous spacer 18 formed of the porous material and provided in the cavity 10. Further, the liquid is guided to return to the liquid atmosphere space S1 through the porous filler material 19 filled in the liquid returning pass 12. Thereby, the amount of liquid leaking through the brush seal 4b into the non-liquid atmosphere space S2 is significantly reduced. Consequently, liquid sealing performance is significantly improved. Further, as in the fourth embodiment shown in FIG. 4, even a mist-state liquid in the cavity 10 can be securely captured through the spacer 18 formed of the porous material. Consequently, the size of the cavity 10 can be reduced, and hence the overall size of the brush seal apparatus can be reduced.

## Claims

1. A liquid-sealing shaft seal apparatus comprising:
a rotation shaft (1);
brush seals (4a, 4b) arranged in such a manner as to contact and surround the rotation shaft (1); and
a brush holder (3) which holds the brush seals (4a, 4b), **characterized in that**
more than one line of brush seals (4a, 4b) are arranged in the axial direction of the rotation shaft through a cavity (10); and
the brush holder (3) is provided with a liquid returning pass (12) to return a liquid having leaked through the brush seals (4a, 4b) into the cavity (10) to the side of an atmosphere (S1) in which a liquid is present as a sealing target.

2. A liquid-sealing shaft seal apparatus according to claim 1, **characterized in that** the plurality of brush seals (4a, 4b) are at least three brush seals (4c, 4d, 4e) arranged through two cavities (10a, 10b) in the axial direction of the rotation shaft (1).

3. A liquid-sealing shaft seal apparatus according to any one of claims 1 and 2, **characterized in that** at least one packing plate (7a, 7b) which is formed of an annular resin sheet having an external diameter larger than a brush portion (5) of the brush seals (4a, 4b) and having a bore (7bb) that contacts with the rotation shaft (1) is provided on at least one of axial sidewalls of each of the plurality of brush seals (4a, 4b).

4. A liquid-sealing shaft seal apparatus according to any one of claims 1 to 3, **characterized in that** the brush holder (3) further provides a through-hole (11) which connects spaces (S1, S2) on two axial sides of the brush seals (4a, 4b) provided around the rotation shaft (1).

5. A liquid-sealing shaft seal apparatus according to any one of claims 1 to 4, **characterized in that** at least one of an inner diameter side shape (9a) of the holding plate (9) and an inner diameter side shape (3a) of an axial side surface of the brush holder (3) on a side axially opposite to the holding plate (9) has an inclined plane which does not include a flat face on the inner diameter side and has a larger internal diameter on a shaft end side than an internal diameter on an axially center side facing the cavity (10).

6. A liquid-sealing shaft seal apparatus according to any one of claims 1 to 5, **characterized in that** each line of the brush seals (4a, 4b) is formed in a manner that at least two brush seal plates (4a1, 4a2) each formed of a plurality of brush seal segments (4a11, 4a12, 4a13, 4a21, 4a22, 4a23) combined into an annular state are overlapped with one another, and split planes of the brush seal segments are shifted from one another in a circumferential direction thereof.

7. A liquid-sealing shaft seal apparatus according to any one of claims 1 to 6, **characterized in that** a brush (16) having a length not contacting the rotation shaft (1) is arranged in the cavity (10) provided with the liquid returning pass (12) between the plurality of brush seals (4a, 4b) arranged in the axial direction of the rotation shaft (1).

8. A liquid-sealing shaft seal apparatus according to any one of claims 1 to 6, **characterized in that** a spacer (18) formed of a porous material and having a bore not contacting the rotation shaft (1) is arranged in the cavity (10) provided with the liquid returning pass (12) configured between the plurality of brush seals (4a, 4b) arranged in the axial direction of the rotation shaft (1).

9. A liquid-sealing shaft seal apparatus according to any one of claims 1 to 8, **characterized in that** a porous material (19) is arranged in the liquid returning pass (12) provided between the plurality of brush seals (4a, 4b) in the axial direction of the rotation shaft (1).

10. A liquid-sealing shaft seal apparatus comprising:
a rotation shaft (1);
brush seals (4a, 4b) arranged in such a manner as to contact and surround the rotation shaft (1); and
a brush holder (3) which holds the brush seals (4a, 4b), **characterized in that**
more than one line of brush seals (4a, 4b) are arranged in an axial direction of the rotation shaft (1) through a cavity (10); and
a pressure in the cavity (10) is higher than a pressure on the side of an atmosphere (S1) in which a liquid is present as a sealing target.

11. A liquid-sealing shaft seal apparatus according to claim 10, **characterized in that**
the pressure on the side of the atmosphere (Q) containing the liquid is maintained to be negative, and
the pressure in the cavity (10a, 10b) is opened to the air atmosphere.

12. A rotary electrical machine using liquids such as a bearing lubrication oil and a seal oil for sealing intra-machine refrigerant gases, **characterized by** comprising the liquid-sealing shaft seal apparatus according to any one of claims 1 to 11.
